# EUROPÄISCHE PATENTANMELDUNG

(11) **EP 3 960 058 A1**
(43) Veröffentlichungstag der Anmeldung: **02.03.2022**
(21) Anmeldenummer: 21185695.0
(22) Anmeldetag: 15.07.2021
(51) Int. Cl.: A47L 9/12, B01D 29/56, B01D 39/16, A47L 9/16

(54) **STAUBSAUGER MIT EINEM FILTER, WOBEI DER FILTER EINEN FALTENBALG UND SCHAUM AUFWEIST**

(30) Priorität: 31.08.2020 DE 102020122630
(71) Anmelder: Miele & Cie. KG, 33332 Gütersloh (DE)
(72) Erfinder: Baric, Martin, 32051 Herford (DE); Kreimeyer, Stefan, 33729 Bielefeld (DE); Schulze, Christian, 32584 Löhne (DE); Uphoff, Carina, 33609 Bielefeld (DE)

(57) **Zusammenfassung**

Die Erfindung betrifft einen Staubsauger mit einem Filter, welcher einen Faltenbalg (1) und einen einstückigen, teilweise verpressten Schaum (2) aufweist.

## Beschreibung

Die Erfindung betrifft einen Staubsauger. Insbesondere betrifft die Erfindung einen Staubsauger mit einem Filter. Derartige Filter dienen dazu, ein Antriebsaggregat des Staubsaugers vor Schmutz zu schützen.

Hierbei ist ein Problem, das entweder die Filtrationswirkung des Filters nicht ausreichend ist, ein Abreinigen des Filters kompliziert ist und/oder der Filter zu schnell verstopft und dementsprechend häufig gereinigt oder sogar getauscht werden muss.

Der Erfindung stellt sich somit das Problem, einen Staubsauger mit einem Filter bereitzustellen, der sowohl eine gute Filtration, eine gute Abreinigbarkeit als auch eine lange Lebens- bzw. Standzeit besitzt.

Erfindungsgemäß wird dieses Problem durch einen Staubsauger mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben einer langen Standzeit in einer einfachen Abreinigung und gleichzeitig einer guten Filtrationsleistung bei geringem Saugkraftverlust.

Die Erfindung betrifft einen Staubsauger mit einem Filter, welcher einen Faltenbalg und einen einstückigen, teilweise verpressten Schaum aufweist.

Der teilweise verpresste Schaum weist in seiner Einstückigkeit durch die teilweise Verpressung gleichzeitig vergleichsweise gröberen Schaum und feineren Schaum auf. Der Filter hat aufgrund der hintereinander geschalteten Filtermedien aus gröberem Schaum, feinerem Schaum und dem Faltenbalg als plissiertes Medium eine sehr hohe Standzeit bei gleichzeitig sehr geringem Druckverlust bzw. Saugkraftverlust. Er lässt sich leicht reinigen beispielsweise durch Auswaschen und weist eine sehr gute Filtration auf.

Der Faltenbalg stellt bevorzugt einen Feinfilter dar. Er ist bevorzugt mit einem Reinigungswerkzeug wie einem Pinsel ausbürstbar und weiterhin unter fließendem Wasser auswaschbar. Ergänzt wird der Faltenbalg mit einem teilweise verpressten Schaum. Der teilweise verpresste Schaum weist gröbere und feinere Poren auf. Der grobporigere Schaum kann somit gröberen Staub sehr gut aufnehmen. Außerdem stellt er so nur einen geringen Luftwiderstand dar, was zu einem geringen Saugkraftverlust führt. Durch die teilweise Verpressung des Schaums ist weist eine Seite des Schaums feinere Poren als die andere Seite auf. Die somit feinporigere Seite des Schaums ermöglicht auch das Filtern von kleineren Partikeln. Dadurch passiert ein von einem Antriebsaggregat des Staubsaugers bei Betrieb erzeugter Luftstrom drei unterschiedliche Arten von Filtermedien, die jeweils gezielt für gröbere, feinere und sehr feine Partikel vorgesehen sind. Dadurch, dass der teilweise verpresste Schaum einstückig ausgebildet ist, weist er bevorzugt nur zwei Komponenten als Filtermedien in Form des Faltenbalgs und des teilweise verpressten Schaums auf.

Bevorzugt weist der teilweise verpresste Schaum eine Lage und eine weitere Lage auf, wobei die Lage eine vorbestimmte Porenanzahl pro Zoll aufweist, die kleiner als eine weitere vorbestimmte Porenanzahl pro Zoll der weiteren Lage ist, und wobei die weitere Lage benachbart zum Faltenbalg angeordnet ist. Ein derartiger teilweise verpresster Schaum ist beispielsweise dadurch herstellbar, dass ein Schaum mit der vorbestimmten Porenanzahl pro Zoll zwischen zwei Platten angeordnet wird und unter Wärmeeinwirkung auf eine Platte bzw. eine Seite des Schaums und unter Anlegen von Druck auf die Platten teilweise verpresst wird beispielsweise solange, bis eine gewünschte Dicke erreicht wird. Dadurch werden die beiden vorstehenden Lagen ausgebildet. In einer bevorzugten Ausführungsform weist der teilweise verpresste Schaum eine Lage mit einer vorbestimmten Porenanzahl pro Zoll im Bereich von 40 bis 80 ppi, bevorzugter 50 bis 70 ppi, und eine weitere Lage mit einer weiteren vorbestimmten Porenanzahl pro Zoll im Bereich von 100 bis 140 ppi, bevorzugter 110 bis 130 ppi auf.

In einer bevorzugten Ausführungsform passiert ein von einem Antriebsaggregat des Staubsaugers bei Betrieb erzeugter Luftstrom zuerst die Lage, dann die weitere Lage und anschließend den Faltenbalg. Das hat den großen Vorteil, dass der Faltenbalg, der von einem durch ein Antriebsaggregat erzeugten Luftstrom strömungstechnisch hinter dem teilweise verpressten Schaum angeordnet ist, weniger durch Partikel belastet wird, sodass seine Standzeit erhöht wird. Das Antriebsaggregat ist bevorzugt ein Gebläse.

Bevorzugt weist der Filter einen Rahmen auf, in dem der Faltenbalg und/oder der teilweise verpresste Schaum angeordnet ist oder sind. Ein Material des Rahmens ist bevorzugt Kunststoff bevorzugter ein Zwei-Komponenten-Kunststoff. Der Rahmen ist bevorzugt als Kunststoffgehäuse bevorzugter in Form eines Hartschalenkastens mit einer Dichtung ausgebildet. Der Faltenbalg ist bevorzugt darin angeordnet bevorzugter eingeklebt. Die Dichtung ist bevorzugt an dem Rahmen angespritzt und weich.

Bevorzugt ist ein Material des Faltenbalgs PTFE (Polytetrafluorethylen). Die vielfältigen und relativ einfachen Möglichkeiten der Compoundierung von PTFE ermöglichen eine einfache und kostengünstige Herstellung des Faltenbalgs aus PTFE. Zudem ist der Faltenbalg aus PTFE stabil und weist eine relativ lange Lebenszeit auf.

Ein Material des teilweisen verpressten Schaums ist bevorzugt Polyester. Ein Schaum aus Polyester weist eine relativ regelmäßige Zellstruktur und eine regulierbare Porosität auf. Weiterhin weist der Polyester-Schaumstoff, eine gute Festigkeit, stoßabsorbierende Eigenschaften und gute akustische Absorptionswerte auf und ist außerdem mit Wasser auswaschbar.

In einer bevorzugten Ausführungsform weist der teilweise verpresste Schaum eine Dicke im Bereich von 10 bis 25 mm, bevorzugt 12 bis 17 mm auf. Die Dicke erstreckt sich von einer Vorder- zu einer Rückseite des teilweise verpressten Schaums insbesondere entlang der Lage und der weiteren Lage des teilweise verpressten Schaums. Der Faltenbalg weist bevorzugt eine Höhe im Bereich von 5 bis 15, bevorzugt 7 bis 12 mm auf. Die Höhe des Faltenbalgs ist eine Abmessung, die sich parallel zur Dicke des teilweise verpressten Schaums erstreckt.

Der Staubsauger ist bevorzugt als Zyklon-Staubsauger ausgebildet. Unter einem Zyklon-Staubsauger ist ein beutelloser Staubsauger zu verstehen, in dem bei Betrieb in einem eintretenden Luftstrom Wirbel und etwaige Verwirbelungen erzeugt werden, wodurch das Sauggut wie z.B. Staubteilchen aufgrund von Fliehkraft in eine vorbestimmte Richtung gedrückt und abgeschieden wird. Unter dem Ausdruck "beutellos" ist zu verstehen, dass das Sauggut in dem Bodenstaubsauger direkt im Abscheiderbehälter gesammelt wird, ohne dass in diesem ein Beutel oder ein ähnliches Wechselfiltermedium zur Aufnahme von Sauggut angeordnet ist, so dass der Nutzer zur Entleerung des Saugguts aus dem Abscheiderbehälter keinen Beutel oder dgl. aus dem Abscheiderbehälter entnimmt. Der Staubsauger weist aber den Zyklon, den Filter und ggf. ein oder mehrere weitere Filtermedien auf, die verhindern, dass Sauggut in das Antriebsaggregat gelangt. Der Abscheiderbehälter weist den Zyklon auf, der bevorzugt eine erste Filterstufe des Staubsaugers bildet.

Bevorzugt ist der Filter stromabwärts von dem Zyklon angeordnet. Bevorzugt stellt der Filter strömungstechnisch die letzte Filterstufe dar, die der von dem Antriebsaggregat des Staubsaugers erzeugte Luftstrom vor dem Antriebsaggregat passiert.

In einer bevorzugten Ausführungsform ist der Filter in einen Abscheiderbehälter des Staubsaugers derart integriert, dass er bei Entnahme des Abscheiderbehälters von einem das Antriebsaggregat enthaltenden Antriebsaggregatbehälter mit ihm zusammen entfernt wird. Dadurch ist er weiterhin leicht reinigbar.

In einer bevorzugten Ausführungsform ist der Staubsauger als ein Bodenstaubsauger ausgebildet. Er ist mit einem Kabel mit Stecker versehen. Ferner weist der Bodenstaubsauger Räder auf, mittels denen dieser bei Betrieb von einem Nutzer über einen zu saugenden Untergrund bewegbar ist.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Querschnittsansicht eines erfindungsgemäßen Staubsaugers;
- Fig. 2: eine perspektivische Explosionsansicht des in Fig. 1 gezeigten Filters;
- Fig. 3: eine Querschnittsansicht des in Fig. 1 gezeigten Filters;
- Fig. 4a, b: jeweils Verfahrensschritte in Schnittansicht zur Herstellung des in Fig. 1 gezeigten teilweise verpressten Schaums; und
- Fig. 5a, b, c: jeweils einen Schaum mit feinen Poren, groben Poren und mittels Verpressung erzeugten feinen und groben Poren, der mit feinen und groben Schmutzpartikeln beaufschlagt ist.

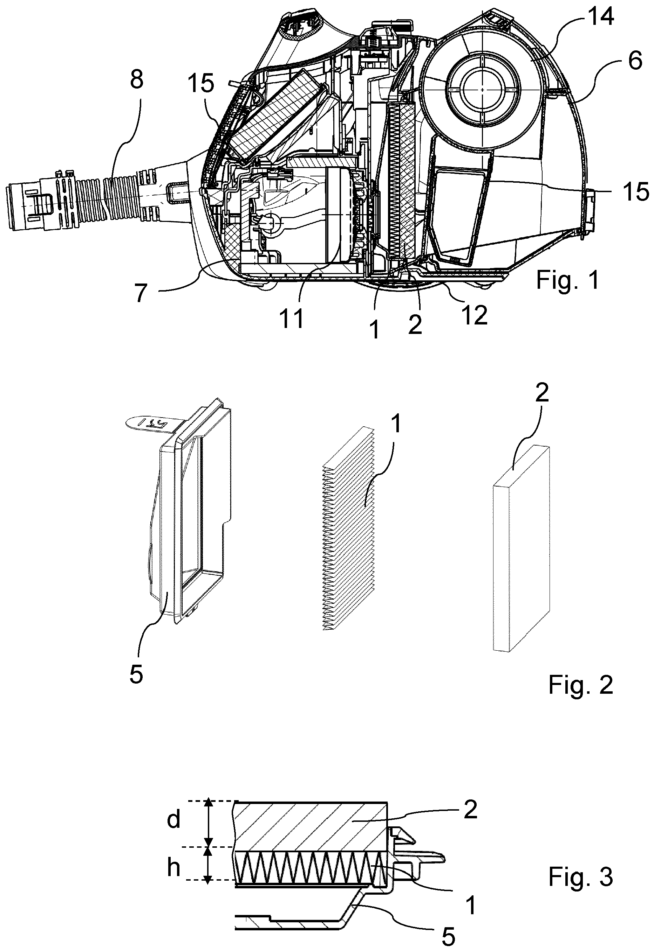

Fig. 1 zeigt eine Querschnittsansicht eines erfindungsgemäßen Staubsaugers. Der Staubsauger weist einen Antriebsaggregatbehälter 7 und einen Abscheiderbehälter 6 auf, die lösbar miteinander verbunden sind. Der Antriebsaggregatbehälter 7 weist ein Antriebsaggregat 11 auf. Ferner weist er einen Saugeingang (nicht gezeigt), an den ein Saugschlauch 8 montiert ist, und ein Abluftgitter 15 auf, durch das ein durch das Antriebsaggregat 11 erzeugter Luftstrom den Staubsauger verlässt. Der Abscheiderbehälter 6 weist einen Zyklon 14 auf. Unter dem Zyklon 14 befindet sich ein Sammelbereich 15, in dem eingesaugtes Sauggut (nicht gezeigt) gesammelt wird. Ferner weist der Abscheidebehälter 6 einen Filter auf, der einen Faltenbalg 1 und einen teilweise verpressten Schaum 2 aufweist. Der Staubsauger ist als Bodenstaubsauger ausgebildet. Er weist Räder 12 auf, mittels denen er über einen Untergrund (nicht gezeigt) bewegbar ist.

Bei Betrieb weist ein von dem Antriebsaggregat 11 erzeugter Luftstrom folgenden Luftweg auf: Der Luftstrom strömt ausgehend von dem Saugeingang (nicht gezeigt) durch einen Kanal (nicht gezeigt) zu einem oberen Bereich des Abscheiderbehälters 6, dann durch den Abscheiderbehälter 6, anschließend durch das Antriebsaggregat 11, dann durch einen Motorraum (nicht gezeigt), wird rückumgelenkt und strömt dann durch den Abluftfilter 15. Bevor der Luftstrom den Abscheiderbehälter 6 verlässt und das Antriebsaggregat 11 passiert, strömt er durch den teilweise verpressten Schaum 2 und dann durch den Faltenbalg 1.

Fig. 2 zeigt eine perspektivische Explosionsansicht des in Fig. 1 gezeigten Filters. Der Filter weist den Faltenbalg 1 und einen einstückigen, teilweise verpressten Schaum 2 auf. Der Filter weist weiterhin einen Rahmen 5 auf, in dem der Faltenbalg 1 angeordnet ist.

Fig. 3 zeigt eine Querschnittsansicht des in Fig. 1 gezeigten Filters. Der Faltenbalg 1 ist in dem Rahmen 5 eingeklebt. Der teilweise verpresste Schaum 2 weist rein beispielhaft eine Dicke d von 15 mm auf. Der Faltenbalg 1 weist rein beispielhaft eine Höhe h von 10 mm auf.

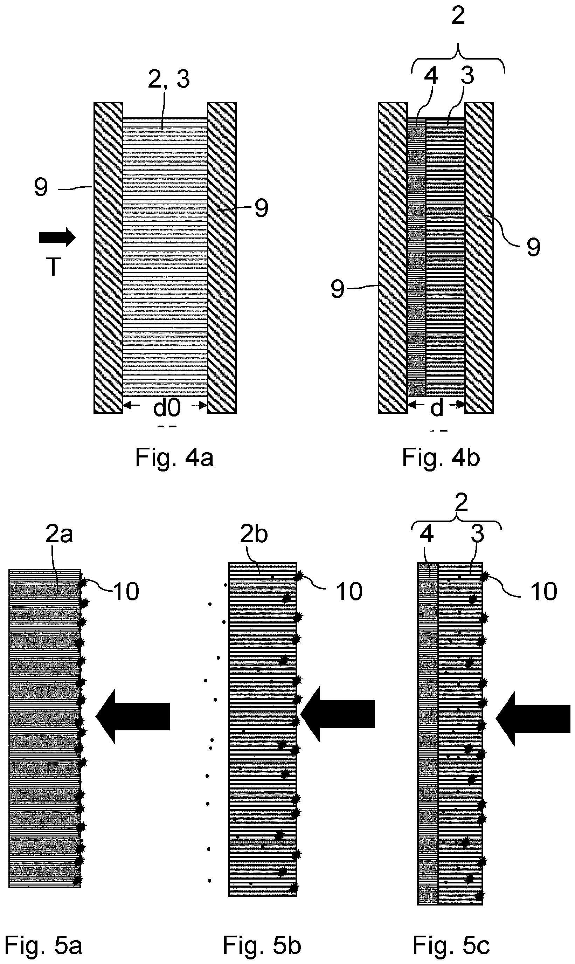

Fig. 4a, b zeigen jeweils Verfahrensschritte in Schnittansicht zur Herstellung des in Fig. 1 gezeigten teilweise verpressten Schaums. In Fig. 4a ist ein unverpresster Schaum 2b mit einer vorbestimmten Anfangsdicke beispielsweise von 25 mm und einer vorbestimmten Porenanzahl pro Zoll beispielsweise von 60 ppi zwischen zwei Platten 9 angeordnet, wobei an die Platten 9 ein Druck angelegt wird und von einer Seite Wärme T zugeführt wird. In Fig. 4b ist ein Verfahrensschritt gezeigt, in dem der teilweise verpresste Schaum 2 erhalten wird. Der Schaum 2b wird dem in Fig. 4a gezeigten Verfahrensschritt so lange unterzogen, bis der teilweise verpresste Schaum 2 eine Dicke d von 15 mm aufweist. Er weist dann eine Lage 3 mit der Porenanzahl pro Zoll von 60 ppi und eine weitere Lage 4 mit einer weiteren vorbestimmten Porenanzahl pro Zoll von 120 ppi. auf.

Fig. 5a, b, c zeigen jeweils einen Schaum mit verschiedener Porenanzahl pro Zoll und den in Fig. 1 gezeigten Filter in Schnittansicht bei Betrieb in einem Staubsauger. Ein durch das Antriebsaggregat erzeugter Luftstrom tritt jeweils in Pfeilrichtung durch den jeweiligen Schaum bzw. Filter. Das Antriebsaggregat liegt stromabwärts von dem jeweiligen Schaum bzw. Filter.

In Fig. 5a ist ein Schaum 2a mit einer Porenanzahl pro Zoll von 120 ppi gezeigt. Bei Betrieb bleiben Schmutzpartikel 10 an seiner Lage 3 haften, können aber nicht eindringen, wodurch der Schaum 2a oberflächlich verdreckt und verstopft wird.

In Fig. 5b ist ein Schaum 2b mit einer Porenanzahl pro Zoll von 60 ppi gezeigt. Bei Betrieb passieren die Schmutzpartikel 10 den Schaum 2b teilweise, teilweise bleiben sie an seiner Lage 3 hängen. Dadurch gelangen die Schmutzpartikel entweder in das Antriebsaggregat oder in einen nachfolgenden Filter.

In Fig. 5c ist der gemäß Fig 4a, 4b hergestellte und in den in Fig. 1 gezeigten Staubsauger eingebaute Filter gezeigt. Bei Betrieb passieren die Schmutzpartikel 10 die Lage 3 teilweise, passieren aber nicht die weitere Lage 4. Der Filter 2 nimmt die Schmutzpartikel 10 auf, ohne zu verstopfen bzw. sie ganz durchpassieren zu lassen, wodurch in den in Fig. 1 gezeigten strömungstechnisch nachgeschalteten Faltenbalg (hier nicht gezeigt) weniger Schmutzpartikel 10 eindringen.

### Bezugszeichenliste

- d: Dicke
- d0: Anfangsdicke
- h: Höhe
- T: Temperatur
- 1: Faltenbalg
- 2: teilweise verpresster Schaum
- 2a: unverpresster Schaum feinporig
- 2b: unverpresster Schaum grobporig
- 3: Lage
- 4: weitere Lage
- 5: Rahmen
- 6: Abscheiderbehälter
- 7: Antriebsaggregatbehälter
- 8: Saugschlauch
- 9: Platte
- 10: Schmutzpartikel
- 11: Antriebsaggregat
- 12: Rad
- 14: Zyklon
- 15: Sammelbereich

## Patentansprüche

1. Staubsauger mit einem Filter, welcher einen Faltenbalg (1) und einen einstückigen, teilweise verpressten Schaum (2) aufweist.

2. Staubsauger nach Anspruch 1, **dadurch gekennzeichnet, dass** der teilweise verpresste Schaum (2) eine Lage (3) und eine weitere Lage (4) aufweist, wobei die Lage (3) eine vorbestimmte Porenanzahl pro Zoll aufweist, die kleiner ist als eine weitere vorbestimmte Porenanzahl pro Zoll der weiteren Lage (4) und die weitere Lage (4) benachbart zum Faltenbalg (1) angeordnet ist.

3. Staubsauger nach Anspruch 1 oder 2, **dadurch gekennzeichnet, dass** ein von einem Antriebsaggregat (11) des Staubsaugers bei Betrieb erzeugter Luftstrom zuerst die Lage (3), dann die weitere Lage (4) und anschließend den Faltenbalg (1) passiert.

4. Staubsauger nach einem der vorangehenden Ansprüche, **dadurch gekennzeichnet, dass** der Filter einen Rahmen (5) aufweist, in dem der Faltenbalg (1) und/oder der teilweise verpresste Schaum (2) angeordnet sind.

5. Staubsauger nach einem der vorangehenden Ansprüche, **dadurch gekennzeichnet, dass** ein Material des Faltenbalgs (1) PTFE (Polytetrafluorethylen) ist, ein Material des teilweisen verpressten Schaums (2) Polyester (2) ist und/oder ein Material des Rahmens (5) Kunststoff ist.

6. Staubsauger nach einem der vorangehenden Ansprüche, **dadurch gekennzeichnet, dass** der teilweise verpresste Schaum (2) eine Dicke (d) im Bereich von 10 bis 25 mm, bevorzugt 12 bis 17 mm aufweist und/oder dass der Faltenbalg (1) eine Höhe (h) im Bereich von 5 bis 15, bevorzugt 7 bis 12 mm aufweist.

7. Staubsauger nach einem der vorangehenden Ansprüche, **dadurch gekennzeichnet, dass** er als Zyklon-Staubsauger ausgebildet ist.

8. Staubsauger nach Anspruch 7, **dadurch gekennzeichnet, dass** der Filter stromabwärts vom Zyklon angeordnet ist.

9. Staubsauger nach einem der vorangehenden Ansprüche, **dadurch gekennzeichnet, dass** der Filter strömungstechnisch die letzte Filterstufe darstellt, die ein von einem Antriebsaggregat (11) des Staubsaugers erzeugter Luftstrom vor dem Antriebsaggregat (11) passiert.

10. Staubsauger nach einem der vorangehenden Ansprüche, **dadurch gekennzeichnet, dass** der Filter in einen Abscheiderbehälter (6) des Staubsaugers derart integriert ist, dass er bei Entnahme des Abscheiderbehälters (6) von einem das Antriebsaggregat (11) enthaltenden Antriebsaggregatbehälter (7) mit ihm zusammen entfernt wird.
